# EUROPEAN PATENT SPECIFICATION

(11) **EP 3 820 122 B1**
(45) Date of publication and mention of the grant of the patent: **02.02.2022**
(21) Application number: 18927000.2
(22) Date of filing: 16.07.2018
(51) Int. Cl.: G06F 1/16, G06F 1/3234, H04M 1/02

(54) **ELECTRONIC DEVICE**
ELEKTRONISCHE VORRICHTUNG
DISPOSITIF ÉLECTRONIQUE

(43) Date of publication of application: 12.05.2021
(73) Proprietor: GUANGDONG OPPO MOBILE TELECOMMUNICATIONS CORP., LTD., Dongguan Guangdong 523860 (CN)
(72) Inventor: YAN, Shenbo, Dongguan, Guangdong 523860 (CN); ZHANG, Heng, Dongguan, Guangdong 523860 (CN); YUAN, Yongliang, Dongguan, Guangdong 523860 (CN); YANG, Junkun, Dongguan, Guangdong 523860 (CN)
(74) Representative: Penza, Giancarlo
(86) International application number: PCT/CN2018/095799
(87) International publication number: WO 2020/014821

(56) References cited:
- CN-A- 105 554 196
- CN-A- 106 302 878
- CN-A- 107 508 939
- CN-U- 205 545 451
- CN-U- 206 640 638
- US-A1- 2010 078 562

## Description

### TECHNICAL FIELD

The present invention relates to the field of electronic devices in general. More particularly, the disclosed embodiments relate to an electronic device with a proximity sensor.

### BACKGROUND

With the development of electronic technology, electronic devices such as smart phones or tablet computers have become widely used. With the rapid development of electronic display devices such as smart phones, users' requirement for display performance of electronic products has gradually increased. The design of full-screens (ultra-narrow bezels) has become the mainstream direction of current research. To achieve a full-screen, it is necessary to re-layout electronic components (such as cameras, sensors, etc.) on the display screen to avoid such devices occupying too much space.

Document US 2010/078562 A1 provides an electronic device having one or more sensors. The electronic device may include openings through which radiation may reach the sensors while keeping the sensors hidden from view. The electronic device may include tunnel (e.g., forming a light pipe) located underneath mesh through which radiation emitted from or detected by a sensor may be ported. Sensors may be positioned at the end of tunnel to emit or detect radiation.

### SUMMARY

In view of this, embodiments of the invention provide an electronic device to solve the above problem to avoid the proximity sensor restricting achieving a full-screen. The invention is defined by features of the independent claims. Preferred embodiments of the invention are defined by features of dependent claims.

### BRIEF DESCRIPTION OF THE DRAWINGS

In order to explain the technical solutions in the embodiments of the invention or the prior art more clearly, the drawings used in the description of the embodiments or the prior art are briefly introduced below.
FIG. 1 illustrates a perspective view of an electronic device, in accordance with an embodiment of the invention.
FIG. 2 illustrates a front projection view of the electronic device illustrated in FIG. 1.
FIG. 3 illustrates an enlarged schematic view of area III in the electronic device illustrated in FIG. 2.
FIG. 4 illustrates a perspective view of a partial structure of the electronic device illustrated in FIG. 1.
FIG. 5 illustrates a perspective exploded view of the partial structure of a housing and a screen assembly of the electronic device illustrated in FIG. 4.

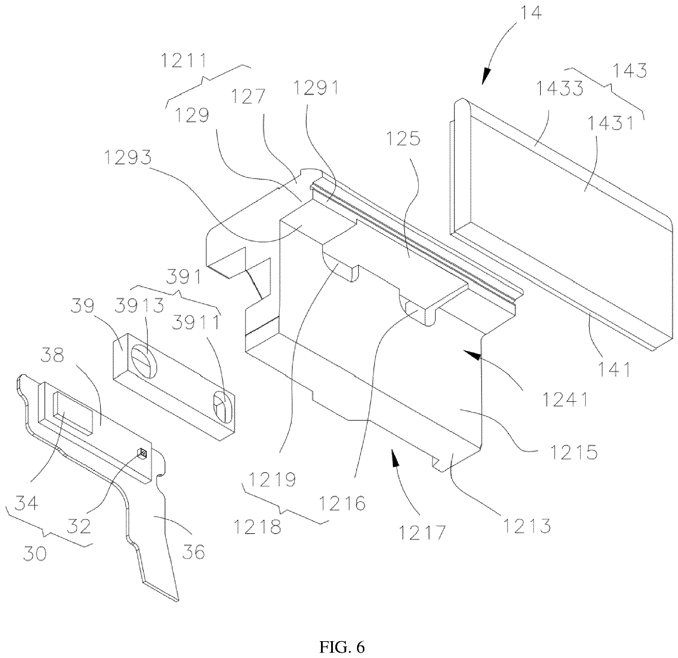

FIG. 6 illustrates a schematic view of a partial structure of the housing and the screen assembly of the electronic device illustrated in FIG. 4.
FIG. 7 illustrates another perspective exploded view of a partial structure of the electronic device illustrated in FIG. 5, taken from the other aspect.
FIG. 8 illustrates a schematic cross-sectional view of a partial structure of the electronic device illustrated in FIG. 4.
FIG. 9 illustrates a front projection view of an electronic device, in accordance with another embodiment of the invention.
FIG. 10 illustrates a schematic diagram of a hardware module of an electronic device, in accordance with still another embodiment of the invention.

### DETAILED DESCRIPTION OF EMBODIMENTS

As used herein, a "communication terminal", "electronic device" or simply a "terminal") includes, but is not limited to, a device that is configured to receive/transmit communication signals via a wire line connection, such as via a public-switched telephone network (PSTN), digital subscriber line (DSL), digital cable, a direct cable connection, and/or another data connection/network, and/or via a wireless interface with, for example, a cellular network, a wireless local area network (WLAN)1 a digital television network such as a DVB-H network, a satellite network, an AM/FM broadcast transmitter, and/or another communication terminal. A communication terminal or an electronic device that is configured to communicate over a wireless interface may be referred to as a "wireless communication terminal," a "wireless terminal" and/or a "mobile terminal." Examples of mobile terminals and electronic devices include, but are not limited to, a satellite or cellular radiotelephone; a Personal Communications System (PCS) terminal that may combine a cellular radiotelephone with data processing, facsimile and data communications capabilities; a PDA that can include a radiotelephone, pager, Internet/intranet access, Web browser, organizer, calendar and/or a global positioning system (GPS) receiver; and a conventional laptop and/or palmtop receiver or other appliance that includes a radiotelephone transceiver.

During the implementation of this application, the inventor discovered that, in terms of hardware, a proximity sensor exposed on the front of an electronic device may be a problem to be solved when achieving a full screen of the electronic device. The proximity sensor is configured to detect a distance of the electronic device and an object in front of the electronic device (such as a human face, palm, etc.). When the distance is smaller than a preset distance, a screen of the electronic device is automatically turned off to avoid a disoperation caused by the object when the object touches the screen. The proximity sensor is usually disposed on an upper portion of the front of the screen and embedded in an edge of the screen. A certain room besides the edge of the screen should be reserved for accommodating the proximity sensor. Therefore, the full screen may not be achieved. Therefore, the inventor is committed to studying how to reduce an edge width of the screen by improving the structure or mounting structure of the proximity sensor to increase the screen-to-body ratio.

The inventor found that in an existing electronic device, a screen assembly of the electronic device is usually covered on a housing of the electronic device. The screen assembly and the housing cooperatively form an appearance of the electronic device. A proximity sensor is usually embedded into the screen assembly. In particular, the proximity sensor is usually embedded into and mounted on an edge of the screen assembly, which makes a frame of the screen assembly has a great width (or forms a wider "black border" in the popular sense), which results in a poor user experience, and the full screen may not be achieved. Therefore, after a lot of research, the inventor has concluded that by changing the path and/or manner of the proximity sensor receiving and transmitting signals, a mounting position of the proximity sensor can be changed to avoid the proximity sensor occupying the space at the edge of the screen assembly.

Therefore, in order to improve the user experience and reduce the width of the frame of the screen assembly as much as possible (that is, reduce the width of the "black border" of the screen assembly), the inventor provides an electronic device after a lot of research. The proximity sensor is disposed in the housing. At least one transmission channel is defined in the housing. The proximity sensor and the screen assembly are respectively arranged at two ends of the transmission channel. The proximity sensor may transmit and receive signals through the transmission channel and the screen assembly, which may avoid embedding the proximity sensor into the screen assembly. Therefore, the width of the frame of the screen assembly is reduced, which is conducive to achieve a full screen.

In particular, an electronic device is provided, in accordance with an embodiment of the present disclosure. The electronic device includes a frame, a screen assembly, and a proximity sensor. The frame defines a transmission channel. The transmission channel includes a first end and a second end opposite to the first end. The screen assembly is connected to the frame. The screen assembly includes a display portion and a non-display portion. The non-display portion is connected to an edge of the display portion. The non-display portion covers the first end of the transmission channel. The proximity sensor is disposed in a receiving space defined by the frame and is adjacent to the second end of the transmission channel. The proximity sensor is opposite to the non-display portion. The proximity sensor transmits and receives signals through the transmission channel and the non-display portion.

The electronic device includes a housing, a screen assembly, and a proximity sensor. The housing defines a transmission channel. The screen assembly includes a display portion and a non-display portion. The non-display portion is connected to an outer periphery of the display portion. The non-display portion covers the housing. The proximity sensor is disposed in a receiving space defined by the housing. The proximity sensor and the non-display portion are respectively disposed at opposite ends of the transmission channel. The proximity sensor transmits and receives through the transmission channel and the non-display portion signal.

In the electronic device provided in the present disclosure, the proximity sensor is disposed in the housing of the electronic device. By defining the transmission channel in the housing, the proximity sensor may transmit and receive signals through the transmission channel. So that the proximity sensor can be disposed in the housing flexibly, and the proximity sensor may be reasonably arranged in the housing without embedding into an edge of the screen assembly, thus avoiding the proximity sensor from occupying the frame of the electronic device, which is beneficial to achieves a full screen for the electronic device.

In the embodiments of the present disclosure, the type of the electronic device is not limited. To take a reference, for a common placement of the electronic device in use, "front side of the electronic device" may indicate a side of the electronic device facing a user; "back side of the electronic device" may indicate a side of the electronic device departing from the user; "top portion" may indicate a portion of the electronic device that adjacent to an upper edge of the electronic device; and "bottom portion" may indicate a portion of the electronic device that adjacent to a lower edge of the electronic device. The technical solutions according to the embodiments of the present disclosure will be clearly and completely described below in conjunction with the drawings in the embodiments of the present disclosure.

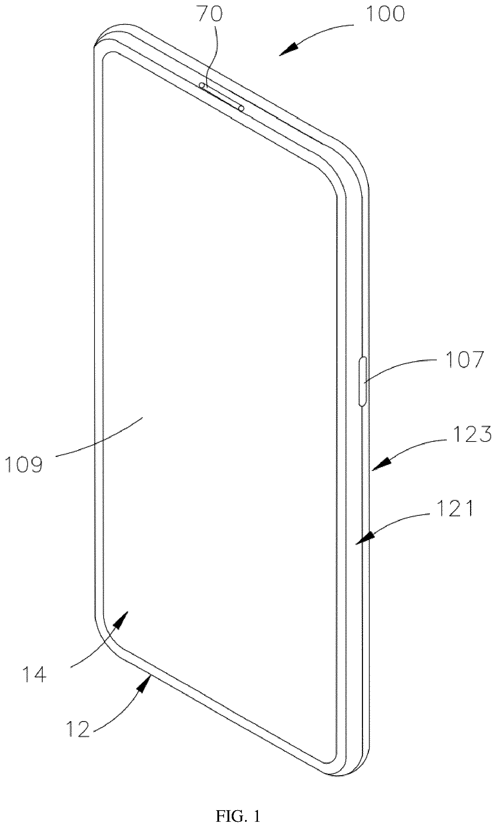

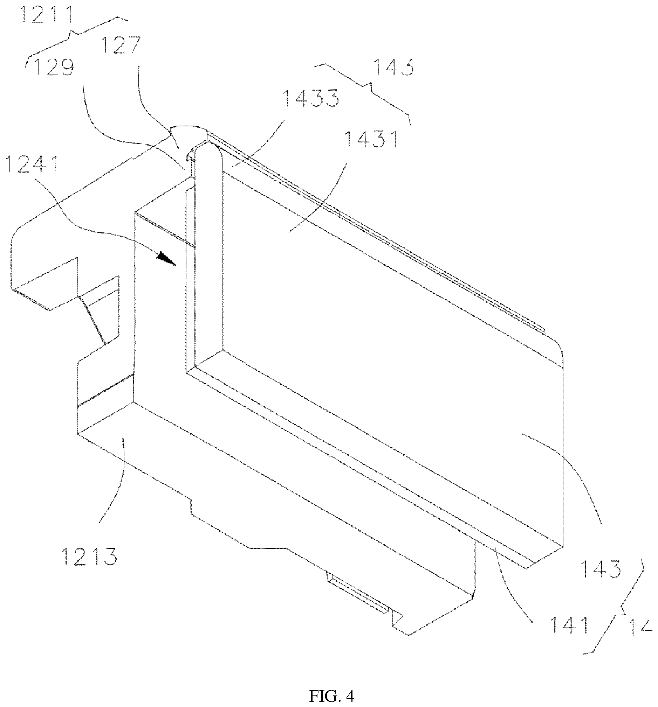

As illustrated in FIG. 1 to FIG. 5, an electronic device 100 is provided, in accordance with an embodiment of the present disclosure. The electronic device 100 can be, but is not limited to, an electronic device such as a mobile phone, a tablet computer, or a smart watch, etc. The electronic device 100 of this embodiment is described by taking a mobile phone as an example. The electronic device 100 includes a housing 12, a screen assembly 14 and a proximity sensor 30. The screen assembly 14 is connected to the housing 12. The housing 12 defines a transmission channel 125. The proximity sensor 30 is disposed in the housing 12 and corresponds to the transmission channel 125. The transmission channel 125 is configured to provide a transmission channel and/or path for signals of the proximity sensor 30 to pass through. So that the proximity sensor 30 transmits or/and receives signals through the transmission channel 125, to detect a distance between the electronic device 100 and an object in front of the electronic device 100 (such as the human face, palm, etc.), so as to allow the screen assembly 14 to automatically turn off when the distance between the electronic device 100 and the object is smaller than a predetermined distance. Thus a misoperation caused by the object touching the screen assembly 14 is avoided.

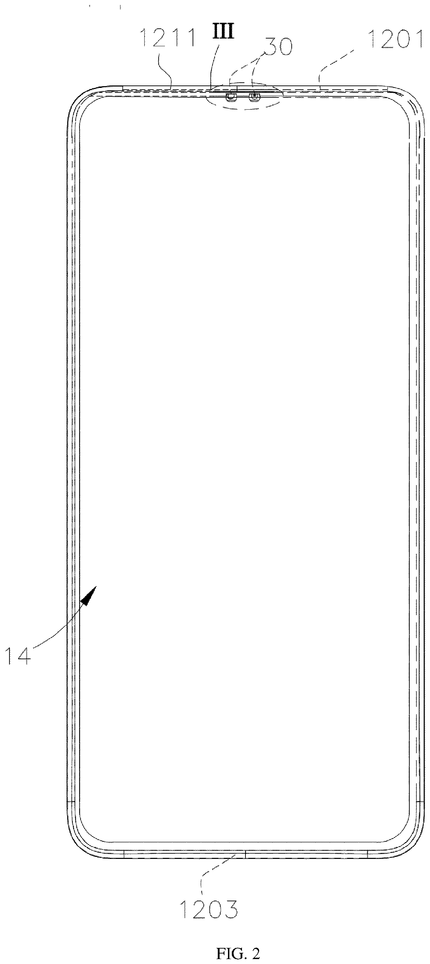

The housing 12 is configured to support the screen assembly 14 and receive other electronic components of electronic device 100. As illustrated in the embodiment of FIGS. 1 and 2, the housing 12 includes a front shell 121 and a rear shell 123. The screen assembly 14 substantially covers one side of the front shell 121. The rear shell 123 is disposed on a side of the front shell 121 away from the screen assembly 14.

As illustrated in FIGS. 2 to 5, the front shell 121 includes a frame 1211 and a mounting member 1213.

In this embodiment, the frame 1211 is substantially in the shape of a rectangular frame with rounded corners. The frame 1211 defines a receiving space 1241. The receiving space 1241 is configured to accommodate the mounting member 1213. The frame 1211 and the mounting member 1213 may cooperatively form a front bezel of the electronic device 100. That is, the front shell 121 can serve as the front bezel of the electronic device 100. At this time, the rear shell 123 may include a side frame and a rear cover (none of which are illustrated in the figure, as illustrated in FIG. 1). The rear shell 123 is disposed outside the front shell 121. The rear shell 123 and the screen assembly 14 together form an appearance structure of the electronic device 14.

It can be understood that, in other embodiments, the frame 1211 may also serve as a side frame of the electronic device 100. In this case, the rear shell 123 serves as a battery cover of the electronic device 100 and is disposed on one side of the frame 1211. It should be understood that the side frame of the electronic device 100 refers to a side periphery portion of the electronic device 100 in the thickness direction. The side frame is together with the rear shell of the electronic device 100 (such as the rear shell 123 serving as a battery cover) and a front side surface (such as the screen assembly 14) form an appearance of the electronic device 100. In some embodiments, the side frame of the electronic device 100 may be an integral structure with the front surface, or may be an integral structure with the rear shell, or may be an independent frame. A structure of the side frame is not limited herein. In the embodiment illustrated in the drawings, the frame 1211 is assembled with the rear shell 123 and the screen assembly 14.

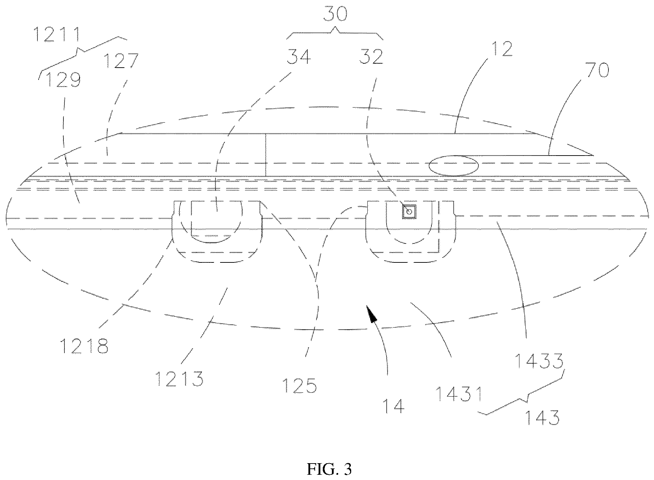

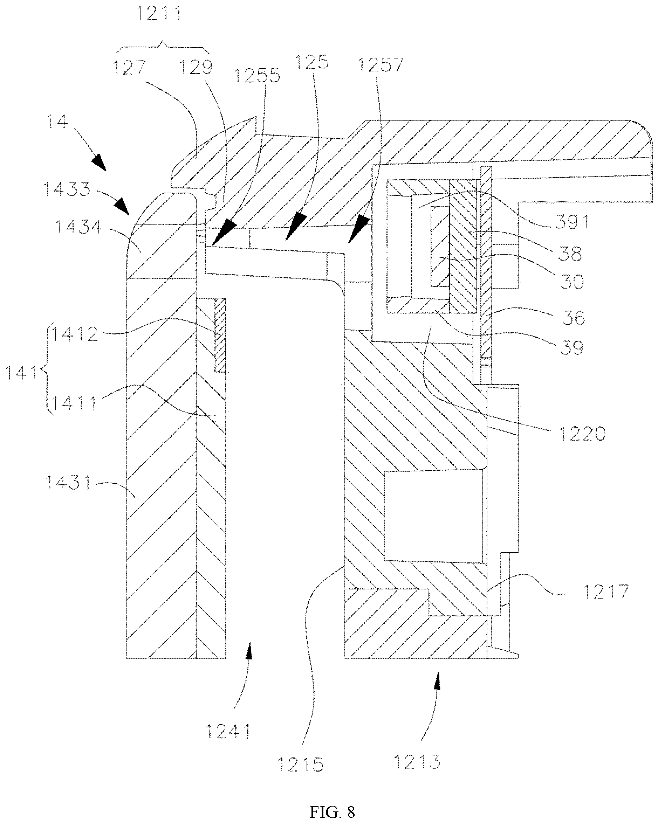

The frame 1211 defines a transmission channel 125. The transmission channel 125 includes a first end 1255 and a second end 1257 opposite to the first end 1255 (as illustrated in FIG. 8). In this embodiment, the transmission channel 125 is defined in a groove structure. The transmission channel 125 is defined in a side of the frame 1211 facing the receiving space 1241 and corresponds to an edge of the screen assembly 14. The first end 1255 is adjacent to the screen assembly 14. The second end 1257 is far away from the screen assembly 14 with respect with the first end 1255. The transmission channel 125 is defined in one or more of the top, left, right, and bottom portions of the frame 1211. It should be understood that the meanings of the above-mentioned "top", "left", "right", and "bottom" can be understood as follows: when the user uses the electronic device 100 and the screen assembly 14 faces a face of the user, the "top portion" may indicate an edge portion of the electronica device 100 that is adjacent to eyes of the user; the "left portion" may indicate an edge portion of the electronica device 100 that is adjacent to a left shoulder of the user; the "right portion" may indicate an edge portion of the electronica device 100 that is adjacent to a right shoulder of the user; the "bottom portion" may indicate an edge portion of the electronica device 100 that is adjacent to a chin of the user. In the embodiments illustrated in FIGS. 2 and 3, the transmission channel 125 is located at the top portion of the frame 1211.

The frame 1211 includes a main body 127 and a support portion 129. The main body 127 is substantially in the shape of a rectangular frame. The support portion 129 is disposed on a side of the main body 127 facing the receiving space 1241 and protrudes from the main body 127.

The support portion 129 includes a support surface 1291 and a mounting surface 1293. The support surface 1291 is connected to the main body 127. The support surface 1291 is configured to connect with the screen assembly 14. The mounting surface 1293 is disposed on a side of the support portion 129 facing the receiving space 1241 and is connected to the supporting surface 1291. In this embodiment, the mounting surface 1293 is substantially perpendicular to the support surface 1291. The transmission channel 125 is defined in the mounting surface 1293. The transmission channel 125 is a groove in the mounting surface 1293. The first end 1255 of the transmission channel 125 penetrates the support surface 1291. The first end 1255 is opposite to the screen assembly 14, so that the screen assembly 14 covers the first end 1255.

In this embodiment, the mounting member 1213 is configured to support a printed circuit board, the proximity sensor 30 and other electronic components of the electronic device 100. The printed circuit board may be the main board of the electronic device 100. The mounting member 1213 is embedded with the frame 1211 so that the frame 1211 may surround the mounting member 1213. In this embodiment, the mounting member 1213 is substantially in the shape of a plate and is connected to the mounting surface 1293. When the mounting member 1213 is disposed in in the frame 1211, the mounting member 1213 is located between the screen assembly 14 and the rear shell 123. In some embodiments, a material of the mounting member 1213 may include, but is not limited to, any one or a combination of metal, plastic, resin, glass, and rubber. In this embodiment, the mounting member 1213, the main body 127, and the support portion 129 are integrally formed. It can be understood that in other embodiments, the mounting member 1213, the main body 127, and the support portion 129 can be assembled together.

Furthermore, the mounting member 1213 includes a first mounting surface 1215 and a second mounting surface 1217. The first mounting surface 1215 is disposed on a side of the mounting member 1213 facing the receiving space 1241. The second mounting surface 1215 is disposed on a side of the mounting member 1213 away from the receiving space 1241. In some embodiments, the mounting member 1213 defines a though hole 1218. The through hole 1218 is defines in a side of the mounting member 1213 adjacent to the support portion 129. The through hole 1218 is in communication with the transmission channel 125. The through hole 1218 is configured to form a signal transmission path of the proximity sensor 30, cooperatively with the transmission channels 125. Thus the proximity sensor 30 transmits signals through the signal transmission path, so that the proximity sensor 30 can be disposed flexibly. In this embodiment, the through hole 1218 penetrates the first mounting surface 1215 and the second mounting surface 1218.

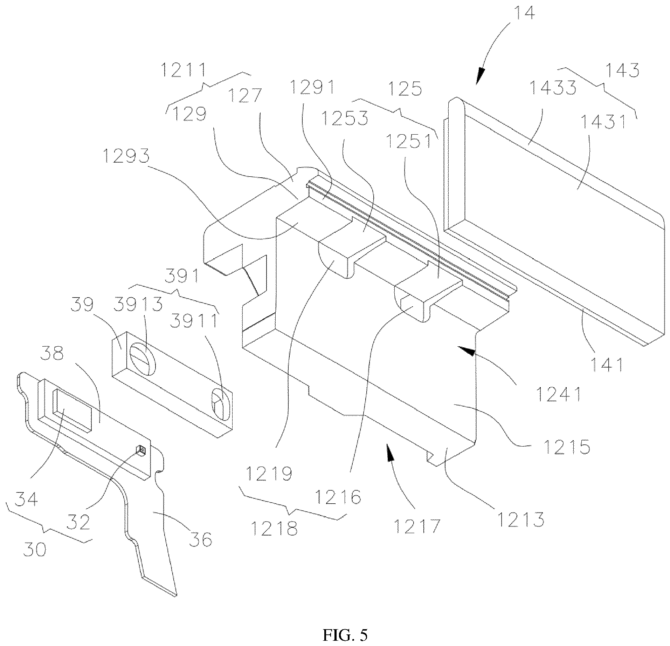

As illustrated in FIGS. 5, 7 and 8, in some embodiments, the proximity sensor 30 is connected to the second mounting surface 1218. The proximity sensor 30 transmits and/or receives signals through the through hole 1218 and the transmission channel 125. Furthermore, the proximity sensor 30 may include a transmitter 32 and a receiver 34. The transmitter 32 is configured to transmitting signals, and the receiver 34 is configured to receiving signals that is reflected by external objects. In some embodiments, in order to prevent the operation of the receiver 34 from being affected by the transmitter 32, the transmitter 32 and the receiver 34 may be arranged separately. For example, the support member 1213 may define two through holes 1218. The two through holes 1218 are spaced apart from each other, and the two through holes 1218 are respectively communicated with the transmission channel 125. When the proximity sensor 30 is connected to the mounting member 1213, the transmitter 32 can be arranged corresponding to one of the through holes 1218, and the receiver 34 can be arranged corresponding to the other through holes 1218. In this way, signals emitted by the transmitter 32 can be prevented from interfering with a detection procedure of the receiver 34, thereby improving an accuracy of detection of the sensor assembly 30.

For example, in the embodiment illustrated in FIG. 5, the two through holes 1218 may include a first through hole 1216 and a second through hole 1219. The transmitter 32 is disposed corresponding to the first through hole 1216, and the receiver 34 is disposed corresponding to the second through hole. At this time, the transmission channel 125 may include a first transmission channel 1251 and a second transmission channel 1253. The first transmission channel 1251 and the second transmission channel 1253 are spaced apart from each other in the support portion 129. The first through hole 1216 communicates with the first transmission channel 1251 to define a signal emitting channel for the transmitter 32. The second through hole 1219 communicates with the second transmission channel 1253 to define a signal receiving channel for the receiver 34. In this way, by providing independent signal emitting channel and signal receiving channel, it can avoid the signal emitted by the transmitter 32 interferes with a detection procedure of the receiver 34, thereby improving an accuracy of detection of the sensor assembly 30.

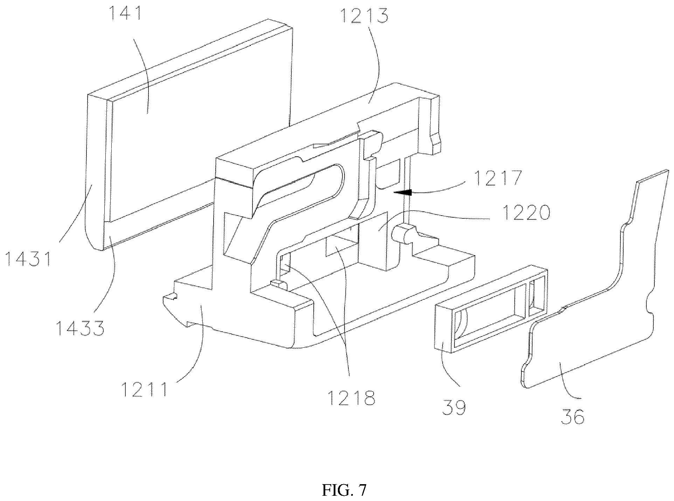

For another example, in the embodiment illustrated in FIG. 7, the two through hole 1218 may include a first through hole 1216 and a second through hole 1219. The transmitter 32 is disposed corresponding to the first through hole 1216, and the receiver 34 is disposed corresponding to the second through hole 1219. At this time, there is one transmission channel 125. The first through hole 1216 and the second through hole 1219 are respectively located on opposite sides of the transmission channel 125. The first through hole 1216 and the second through hole 1219 are respectively communicated with the transmission channel 125. In this way, the transmitter 32 is apart from the receiver 34 by the first through hole 1216 and the second through hole 1219, which can avoid the signal emitted by the transmitter 32 interferes with a detection procedure of the receiver 34. The transmission channel 125 is in a wider groove structure, which can simplify the manufacturing procedure of the front shell 121, and reduce costs and improve production efficiency.

In some embodiments, the proximity sensor 30 may be an infrared proximity sensor. In this case, the transmitter 32 is an infrared transmitter, and the receiver 34 is an infrared receiver. The infrared proximity sensor works by infrared emission and infrared reception. For the electronic device 100, the transmitter 32 may emit infrared signals, and the infrared signals may be reflected by an external object, the receiver 34 may receive the infrared signals that are reflected. When the external object is closed to the electronic device 100, an intensity of the infrared signals received by the receiver 34 is relatively greater. When the external object is far away from the electronic device 100, an intensity of the infrared signals received by the receiver 34 is relatively smaller. The infrared proximity sensor may obtain a distance between the electronic device 100 and the external object based on the intensity of the infrared signals received by the receiver 34.

In some embodiments, the proximity sensor 30 may be an ultrasonic proximity sensor. In this case, the transmitter 32 is an ultrasonic transmitter, and the receiver 34 is an ultrasonic receiver. The ultrasonic proximity sensor works by ultrasonic emission and ultrasonic reception. For the electronic device 100, the transmitter 32 may emit ultrasonic signals, and the ultrasonic signals may be reflected by an external object, the receiver 34 may receive the ultrasonic signals that are reflected. When the external object is closed to the electronic device 100, an intensity of the ultrasonic signals received by the receiver 34 is relatively greater. When the external object is far away from the electronic device 100, an intensity of the ultrasonic signals received by the receiver 34 is relatively smaller. The ultrasonic proximity sensor may obtain a distance between the electronic device 100 and the external object based on the intensity of the ultrasonic signals received by the receiver 34.

Furthermore, in some embodiments, the electronic device 100 further includes a flexible circuit board 36 and a substrate 38. The flexible circuit board 36 is disposed on the second mounting surface 1215 of the mounting member 1213 and is electrically coupled to a control board of the electronic device 100. The substrate 38 is disposed on a side of the flexible circuit board 36 facing the mounting member 1213. The transmitter 32 and the receiver 34 are disposed on the substrate 38 spaced from each other. A distance between a geometric center of the transmitter 32 and a geometric center of the receiver 34 may be 2-14 mm. The transmitter 32 and the receiver 34 can be separated spatially when the transmitter 32 is apart from the receiver 34, so as to reduce the influence of the signal transmitted by the transmitter 32 on the receiver 34. Of course, in other embodiments, the transmitter 32 and the receiver 34 may be arranged adjacent to each other, so as to reduce the size of the proximity sensor 30.

Further, in some embodiments, the electronic device 100 may further include a protective member 39. The protective member 39 is stacked on a side of the substrate 38 facing the mounting member 1213 and covers the proximity sensor 30. The protective member 39 defines a transmission hole 391 therein. The transmission hole 391 penetrates the protecting member 39. The proximity sensor 30 is accommodated in the transmission hole 391 and configured to transmit or/and receive signals through the transmission hole 391. Furthermore, there are two transmission holes 391 defined in the protective member 39. The two transmission holes 391 include a first transmission hole 3911 and a second transmission hole 3913. The first transmission hole 3911 and the second transmission hole 3913 are spaced apart from each other. The emitter 32 is accommodated in the first transmission hole. 3911. The receiver 34 is accommodated in the second transmission hole 3913. In this way, the transmitter 32 and the receiver 34 can be separated from each other, so as to protect the receiver 34 from being affected by the transmitter 32.

In some embodiments, the transmitter 32, the receiver 34, and the substrate 38 are packaged as a chip structure to facilitate an assembly procedure of the proximity sensor 30. Alternatively, the transmitter 32, the receiver 34, the substrate 38, and the protective member 39 can be packaged as a chip structure to facilitate the assembly procedure of the proximity sensor 30 and improve production efficiency.

Furthermore, in some embodiments, in order to accommodate the aforementioned chip structure to reduce an occupying space of the sensor assembly 30, the mounting member 1213 may define a recess 1220. The recess 1220 is defined in the second mounting surface 1217. The through hole 1218 penetrates a bottom wall of the recess 1220, so that the recess 1220 and the through hole 1218 are communicated with each other. The flexible circuit board 36 covers the recess 1220, so that the transmitter 32, the receiver 34, the substrate 38, and the protective member 39 are accommodated in the recess 1220, thereby making an internal structure of the electronic device 100 more compact, which makes the electronic device 100 thinner.

As illustrated in FIGS. 5 and 8, the screen assembly 14 is connected to the frame 1211 of the housing 12. The screen assembly 14 is opposite to the mounting member 1213 and spaced apart from the mounting member 1213.

In this embodiment, the screen assembly 14 includes a display module 141 and a cover plate 143. The cover plate 143 is disposed on the frame 1211. The cover plate 143 and the frame 1211 are connected together by glue (in particular, optical transparent glue or other adhesive). The cover plate 143 may be made of a transparent material, which serves as a transparent panel of the screen assembly 14 and can be configured to protect the display module 141 from scratches. Furthermore, the cover plate 143 may be a glass cover plate, a resin cover plate, a sapphire cover plate, or the like.

The display module 141 is disposed on a side of the cover plate 143 facing the mounting member 1213. The display module 141 and the cover plate 143 are connected together by optically clear adhesive (OCA, not illustrated in the drawings). In this embodiment, the display module 141 does not completely cover the entire surface of the cover plate 143. That is, when the display module 141 is attached to the cover plate 143, there is a rest portion between an edge of the cover plate 143 and an edge of the display module 141. A preset distance between the edge of the cover plate 143 and the edge of the display module 141 is defined by the rest portion. The rest portion is configured to connect to the frame 1211, thus the cover plate 143 is attached to the frame 1211. Therefore, a gap is defined by the edge of the display module 141 and the frame 1211. Due to the existence of the gap and the rest portion for attaching the cover plate 143 to the frame 1211, after the light 1410 emitted by the display module 141 passes through the cover plate 143, the edge and the rest portion of the cover plate 143 forms a black border because the light 1410 may not pass through the rest portion or the light 1410 passing through the rest portion is very weak. The cover 143 is divided into a display portion 1431 and a non-display portion 1433. The display portion 1431 overlaps the display module 141, and the non-display portion 1433 is an area of the cover 143 except the display portion 1431. In short, the non-display portion 1433 is considered as the black border of the cover plate 143.

The screen assembly 143 is connected to the support portion 129 via the non-display portion 1433. In particular, the non-display portion 1433 is stacked on the support surface 1291 of the support portion 129 and is disposed on one end of the transmission channel 125. The proximity sensor 30 is opposite to the non-display portion 133 via the transmission channel 125. The proximity sensor 30 transmits and/or receives signals through the transmission channel 125 and the non-display portion 133.

In some embodiments, the display module 141 may include a display screen 1411 and a drive circuit 1412. The display screen 1411 is an area of the display module 141 that contacts with the cover plate 143. The drive circuit 1412 is disposed on a side of the display module 141 away from the cover plate 143, and located at an edge of the display module 141. At this time, due to the existence of the drive circuit 1412, a part of the display screen 1411 that overlaps the drive circuit 1412 cannot emit light, so the display screen 1411 can be divided into a sub-display portion and a sub-non-display portion. At this time, the display portion 1431 of the cover 143 may be an area of the cover plate 143 located above the sub-display portion. The non-display portion 1433 of the cover plate 143 is a combination of an area of the cover plate 143 located above the sub-non-display portion and an area from the foregoing mentioned area to the edge of the cover plate 143. It should be understood that the non-display portion 1433 of the cover plate 143 is considered as the black border as known.

Therefore, in the electronic device 100 provided by the embodiments of the present disclosure, the black border of the display assembly 10 is stacked on the support portion 129 of the frame 1211. The transmission channel 125 is defined in the support portion 129, which can make full use of the black border and the gap defined by the connection structure of the frame 1211 and the display assembly 14, to form a signal transmission channel or path for the proximity sensor 30. Therefore, the proximity sensor 30 is rationally arranged without embedding into the black border of the screen assembly 14, thus avoiding occupying the side frame of the electronic device 100, which is conducive to achieve a full-screen for the electronic device 100.

In some embodiments, the non-display portion 1433 may include a transmission region 1434. The transmission region 1434 is aligned with the transmission channel 125, and configured to allow the signals of the proximity sensor 30 to pass through, thereby preventing the non-display portion 1433 from shielding the signals of the proximity sensor 30. Furthermore, the transmission region 1434 may be in the shape of a hole or an area coated with ink. The ink is configured to filter visible light and ensure that an appearance of the transmission region 1434 is the same or similar to an appearance of other regions of the non-display portion 1433.

In some embodiments, a position of the proximity sensor 30 with respect to the mounting member 1213 is not limited. For example, in the above-provided embodiments, the proximity sensor 30 is disposed on a side of the mounting member 1213 away from the screen assembly 14 (e.g. the second mounting surface 1217). The proximity sensor 30 may transmit or/and receive signals through the through hole 1218 and the transmission channel 125. Alternatively, in some embodiments, the proximity sensor 30 may be disposed on a side of the mounting member 1213 facing the screen assembly 14 (e.g. in particular, the first mounting surface 1215), and the proximity sensor 30 is disposed corresponding to the transmission channel 125, and can transmit or/and receive signals through the transmission channel 125. Alternatively, in some other embodiments, the proximity sensor 30 may be disposed in the transmission channel 125 and connected to the support portion 129, so that the proximity sensor 30 can transmit or/and receive signals through the transmission channel 125.

For example, the proximity sensor 30 may be located at a top portion of the electronic device 100. At this time, the transmission channel 125 is defined in the top portion of the electronic device 100. Furthermore, the transmission channel 125 may be defined in a substantially middle portion of the top portion of the electronic device 100, to facilitate the proximity sensor 30 to accurately sense the distance between the external object and the electronic device 100. In particular, the electronic device 100 may include a receiver (also called a receiver, not illustrated in the drawings) disposed in the housing 12. The housing 12 defines a sound hole 70 corresponding to the receiver (as illustrated in FIGS. 1 and 3). The sound hole 70 is substantially located at the top portion of the electronic device 100. The sound hole 70 is disposed adjacent to the proximity sensor 30. In other words, the proximity sensor 30 is adjacent to the sound hole 70 and is disposed at one side of the sound hole 70, so as to more accurately detect the distance between the user's ear/face and the electronic device 100. When the user moves the electronic device 100 to the face or ear thereof (for example, when answering or making a call), the proximity sensor 30 may work more accurately. Therefore, the screen assembly 14 may be turned off or turned on according to the distance between the electronic device 100 and the user's face/ear.

In some embodiments, when the proximity sensor 30 is disposed on the top portion of the electronic device 100, the frame 1211 may include a first sub-frame 1201 and a second sub-frame 1203 (as illustrated in FIG. 2) opposite to the first sub-frame 1201. The first sub-frame 1201 and the second sub-frame 1203 are substantially parallel to each other. The screen assembly 14 is disposed between the first sub-frame 1201 and the second sub-frame 1203. The first sub-frame 1201 serves as a "top" frame of the electronic device 100, and the second sub-frame 1203 serves as a "bottom" frame of the electronic device 100. The first sub-frame 1201 defines a sound channel corresponding to the sound hole 70. The sound channel is disposed between the sound hole 70 and the receiver for allowing sound waves to transmit. At this time, the transmission channel 125 is defined in the first sub-fame 1201 adjacent to the sound channel.

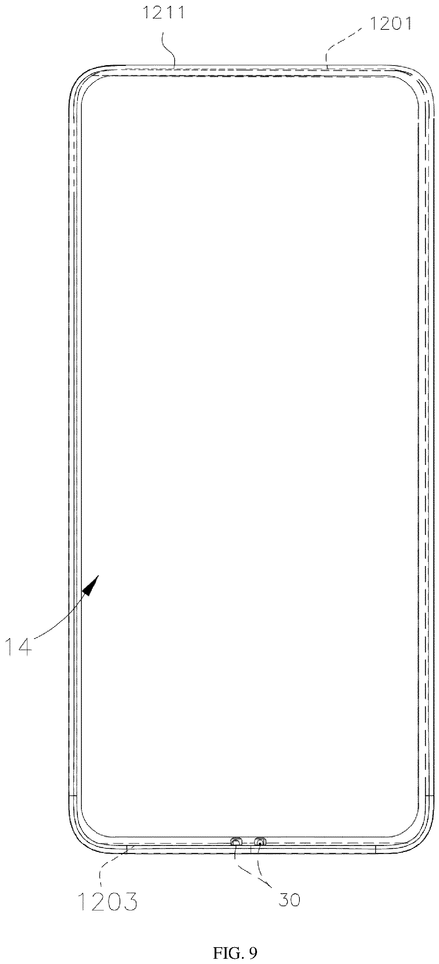

Alternatively, in some embodiments, as illustrated in FIG. 9, the sensor assembly 30 may be disposed on a bottom portion of the electronic device 100. At this time, the transmission channel 125 may be defined in the bottom portion of the electronic device 100. In particular, the transmission channel 125 can be defined in the second sub-frame 1203, so that the proximity sensor 30 can be disposed on a portion except the top portion that supports multiple components. Therefore, the proximity sensor 30 can have a larger installation space for assembling, which makes an assembly procedure of the electronic device 100 easier.

Alternatively, the proximity sensor 30 may be disposed adjacent to a left side of the electronic device 100. At this time, the transmission channel 125 is defined in the left side of the electronic device 100. Alternatively, the proximity sensor 30 may be disposed adjacent to a right side of the electronic device 100. At this time, the transmission channel 125 is defined in the right side of the electronic device 100.

It can be understood that, in some embodiments, the transmission channel 125 may be a channel structure other than a groove structure. For example, the transmission channel 125 may have a though-hole, which is defined in the support portion 129 and penetrates the support portion 129. The non-display portion 1433 of the screen assembly 14 and the proximity sensor 30 are located at opposite ends of the through-hole. The proximity sensor 30 receives or/and transmits signals through the through hole and the non-display portion 1433.

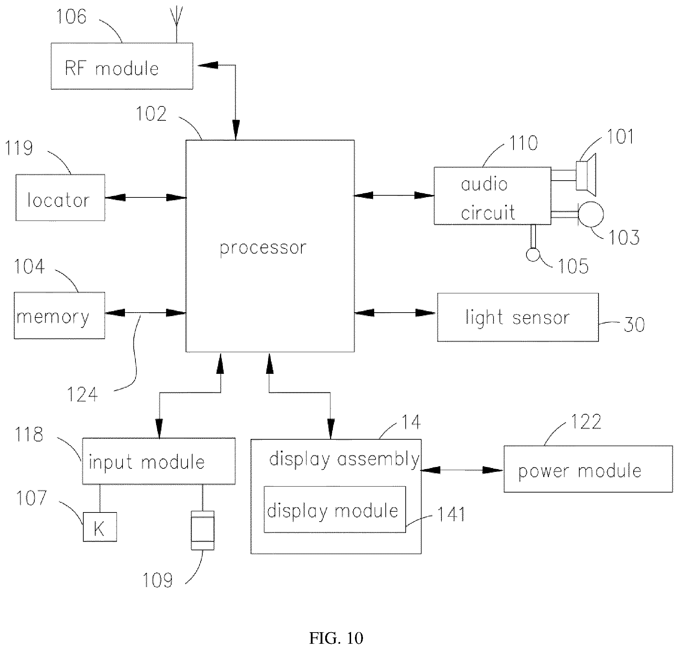

As illustrated in FIG. 10, in accordance with the embodiments of the present disclosure, in an actual disclosure scenario, the electronic device 100 can be used as a smart phone terminal, in which case the electronic device 100 typically further includes one or more (only one illustrated in FIG. 10) processor 102, memory 104, the radio frequency (RF) module 106, an audio circuit 110, a sensor, an input module 118, and a power module 122. It will be understood by those skilled in the art that the structure illustrated in FIG. 10 is merely illustrative and does not limit a structure of the electronic device 100. For example, the electronic device 100 may further include more or less components than those illustrated in FIG. 10, or have a different configuration than that illustrated in FIG. 10.

It will be understood by those skilled in the art that all other components are peripherals relative to the processor 102. The processor 102 is coupled to the peripherals via a plurality of peripheral interfaces 124. The peripheral interface 124 can be implemented based on the following standards: Universal Asynchronous Receiver/Transmitter (UART), General Purpose Input Output (GPIO), Serial Peripheral Interface (SPI)), Inter-Integrated Circuit (I2C), but not limited to the above standards. In some embodiments, the peripheral interface 124 may only include a bus. In other embodiments, the peripheral interface 124 may also include other elements, such as one or more controllers, such as a display controller or a memory controller configured to connect the memory. In addition, these controllers can also be separated from the peripheral interface 124 and integrated into the processor 102 or corresponding peripherals.

The memory 104 can be configured to store software programs and modules. The processor 102 is configured to execute various functional disclosures and data processing by running software programs and modules stored in the memory 104. The memory 104 may include a high-speed random access memory, and may also include a non-volatile memory, such as one or more magnetic storage devices, flash memory, or other non-volatile solid-state memory. In some examples, the memory 104 may further include a memory remotely provided with respect to the processor 102. These remote memories may be connected to the processor 102 or the screen assembly 14 of the electronic device 100 vis a network. Examples of the aforementioned networks include, but are not limited to, the Internet, corporate intranets, local area networks, mobile communication networks, and combinations thereof.

The radio frequency module 106 is configured to receive and transmit electromagnetic waves, and realize mutual conversion between electromagnetic waves and electric signals. Therefore, the electronic device 100 is capable of communicating with a network or other devices. The radio frequency module 106 can include various existing circuit components for performing these functions, such as an antenna, a radio frequency transceiver, a digital signal processor, an encryption/decryption chip, a Subscriber Identity Module (SIM) card, a memory, etc. The radio frequency module 106 can communicate with various networks such as the Internet, an intranet, a wireless network, or communicate with other devices through a wireless network. The above-mentioned wireless network can use various communication standards, protocols and technologies, including but not limited to Global System for Mobile Communication (GSM), Enhanced Data GSM Environment (EDGE), broadband code Wideband code division multiple access (W-CDMA), code division multiple access (CDMA), time division multiple access (TDMA), wireless fidelity (Wireless, Fidelity), Wi-Fi) (such as the American Institute of Electrical and Electronics Engineers standard IEEE 802.10A, IEEE 802.11b, IEEE802.11g and/or IEEE 802.1 In), Internet telephony (Voice over internet protocol, VoIP), Worldwide Interoperability for Microwave Access, Wi-Max), other protocols for email, instant messaging and short messages, and any other suitable communication protocols, even those that have not yet been developed.

The audio circuit 110, the speaker 101, the sound jack 103, and the microphone 105 collectively provide an audio interface on the electronic device 100 or the display assembly 14 for a user. In particular, the audio circuit 110 receives sound data from the processor 102, converts the sound data into electrical signals, and transmits the electrical signals to the speaker 101. The speaker 101 converts electrical signals into sound waves that can be heard by human ears. The audio circuit 110 also receives electrical signals from the microphone 105, converts the electrical signals into sound data, and transmits the sound data to the processor 102 for further processing. The audio data can be obtained from the memory 104 or through the radio frequency module 106. In addition, the audio data can also be stored in the memory 104 or sent via the radio frequency module 106.

The sensors are disposed within housing 12 or within the display assembly 14. Examples of the sensors can include, but are not limited to, proximity sensors, operational sensors, pressure sensors, gravity acceleration sensors, and other sensors. In addition, the electronic device 100 can also be configured with other sensors such as a gyroscope, a barometer, a hygrometer, a thermometer, and the like, and details are not described herein again.

In this embodiment, the input module 118 may include a touch screen 109 provided in the screen assembly 14. The touch screen 109 may collect user's touch operations on or near it (for example, the user uses a finger, a stylus, or any other suitable object or accessory operation on the touch screen 109 or near the touch screen 109), and drive the corresponding device according to a preset program. Optionally, the touch screen 109 may include a touch detection device and a touch controller. The touch detection device may detect the user's touch position, and detects signals generated according the touch operation, and transmits the signals to the touch controller. The touch controller may receive the touch information from the touch detection device and convert the touch information into contact coordinates. Then sent to the processor 102, and can receive the command sent by the processor 102 and execute it. In addition, multiple types such as resistive, capacitive, ultrasonic, and surface acoustic wave can be used to implement the touch detection function of the touch screen 109. In addition to the touch screen 109, in other modified implementation manners, the input module 118 may also include other input devices, such as keys 107. The keys 107 may include, for example, character keys for inputting characters, and control keys for triggering control functions. Examples of control buttons include a "return to main screen" button, a power on/off button, and so on.

The screen assembly 14 is configured to display various graphical user interfaces for information input by the user and information of the electronic device 100 provided to the user. These graphical user interfaces may be composed of graphics, text, icons, numbers, videos, and any combination thereof. In one example, the touch screen 109 can be disposed on the display assembly 14 to be integrated with the display assembly 14.

Further, the display screen 1411 of the screen assembly 14 may be a liquid crystal display (Liquid Crystal Display, LCD) or an organic light-emitting diode (OLED) display. When the display screen 1411 is a liquid crystal display, it may also include a backlight plate, a lower polarizer, an array substrate, a liquid crystal layer, a color filter substrate, an upper polarizer and other structures stacked in sequence. When the display screen 1411 is an organic light emitting diode display screen, it may also include a base layer, an anode, an organic layer, a conductive layer, an emission layer, a cathode, and other structures stacked in sequence.

The power module 122 is configured to provide power to the processor 102 and other components. In the illustrated embodiment, the power module 122 may include a power management system, one or more power sources (such as a battery or an alternating current), a charging circuit, a power failure detecting circuit, an inverter, a power status indicator, and any other component which is related to the generation, management, and distribution of power within electronic device 100 or the display assembly 14.

The electronic device 100 can also include a locator 119 for determining the actual location at which the electronic device 100 is located. In this embodiment, the locator 119 applies a location service to implement the positioning of the electronic device 100. The positioning service should be understood as a technology or service of the location of the object being located, which is configured to acquire the location information (such as latitude and longitude coordinates) of the electronic device 100 by using a specific positioning technology, and marking the electronic map.

Furthermore, as illustrated in some embodiments, the electronic device 100 may be a full-screen electronic device. The full-screen electronic device should be considered as an electronic device having a screen ratio greater than or equal to a preset value. That is, when the display assembly 14 is disposed on the front side of the housing 12, the percentage of the surface area of the display assembly 14 and the projected area of the front surface of the housing 12 is greater than or equal to a preset value. In some embodiments, the preset value of the screen ratio may be greater than or equal to 74%, such as 74%, 75%, 76%, 78%, 79%, 80%, 81%, 83%, 85%, 87%. 89%, 90%, 91%, 93%, 95%, 97%, 99%, etc. In some embodiments, a front side of the full-screen electronic device may be provided with three or fewer physical keys (such as button 107). And/or, the front side of the full-screen electronic device may be provided with two or fewer openings. Therefore, a structure of the full-screen electronic device can be simplified; and it is beneficial to increase the screen ratio of the full-screen electronic device.

In addition, the terms "first" and "second" are only used for descriptive purposes, and cannot be understood as indicating or implying relative importance or implicitly indicating the number of indicated technical features. Therefore, the features defined with "first" and "second" may explicitly or implicitly include at least one of the features. In the description of the present disclosure, "a plurality of" means at least two, such as two, three, etc., unless specifically defined otherwise.

The technical features of the embodiments described above can be arbitrarily combined. In order to simplify the description, all possible combinations of the technical features in the above embodiments have not been described. However, as long as there is no contradiction in the combination of these technical features, it should be considered as the scope described in this specification.

## Claims

1. An electronic device (100), comprising:
a frame (1211), defining at least one transmission channel (125) therein, and the transmission channel (125) comprising a first end (1255) and a second end (1257) opposite to the first end (1255);
a screen assembly (14), connected to the frame (1211); the screen assembly (14) comprising a display portion (1431) and a non-display portion (1433) being connected to an edge of the display portion (1431), and the non-display portion (1433) covering the first end (1255); and
a proximity sensor (30), disposed in a receiving space (1241) defined by the frame (1211);
wherein the proximity sensor (30) is adjacent to the second end (1257), and opposite to the non-display portion (1433) via the transmission channel (125); the proximity sensor (30) is configured to transmit and receive signals that passes through the transmission channel (125) and the non-display portion (1433);
**characterized in that**
the frame (1211) comprises a main body (127) and a support portion (129), the support portion (129) protrudes from a side of the main body (127) facing the receiving space (1241); the transmission channel (125) is defined in the support portion (129), the support portion (129) comprises a support surface (1291) connected to the main body (127), the non-display portion (1433) is attached to the support portion (129) and stacked on the support surface (1291), the first end (1255) of the transmission channel (125) penetrates the support surface (1291).

2. The electronic device (100) of claim 1, wherein the frame (1211) comprises a first sub-frame (1201) and a second sub-frame (1203) opposite to the first sub-frame (1201); the screen assembly (14) is disposed between the first sub-frame (1201) and the second sub-frame (1203); the electronic device (100) comprises a receiver disposed in the receiving space (1241); the first sub-frame (1201) defines a sound channel for the receiver; the transmission channel (125) is defined in the first sub-frame (1201) or in the second sub-frame (1203).

3. The electronic device (100) of claim 1, wherein the non-display portion (1433) comprises a transmission region (1434) for allowing signals from the proximity sensor (30) to pass through; the transmission region (1434) is disposed opposite to the proximity sensor (30), and the proximity sensor (30) is adapted to transmit and receive signals through the transmission region.

4. The electronic device (100) of claim 1, wherein the transmission channel (125) is a groove; the groove is defined in a side of the frame (1211) facing the receiving space (1241); the non-display portion (1433) and the proximity sensor (30) are respectively disposed at two opposite ends of the groove.

5. The electronic device (100) of claim 1, wherein the transmission channel (125) has a through-hole; the through-hole is defined in the support portion (129) and penetrates the support portion (129); and the non-display portion (1433) and the proximity sensor (30) are respectively disposed at two opposite ends of the through-hole.

6. The electronic device (100) of claim 1, wherein the support portion (129) comprise a mounting surface (1293), the mounting surface (1293) is disposed on a side of the support portion (129) facing the receiving space (1241) and is connected to the supporting surface (1291), and the transmission channel (125) is defined in the mounting surface (1293).

7. The electronic device (100) of claim 1, wherein the electronic device (100) comprises a mounting member (1213); the mounting member (1213) is connected to the support portion (129) and disposed opposite to the screen assembly (14); the proximity sensor (30) is connected to the mounting member (1213).

8. The electronic device (100) of claim 7, wherein the mounting member (1213) comprises a first mounting surface (1215) facing the screen assembly (14) and a second mounting surface (1217) away from the screen assembly (14); the mounting member (1213) defines at least one though hole (1218) therein; the through hole (1218) penetrates the first mounting surface (1215) and the second mounting surface (1217) and communicates with the transmission channel (125); the proximity sensor (30) is connected to the second mounting surface (1217) and corresponds to the through hole (1218).

9. The electronic device (100) of claim 8, wherein the at least one through hole (1218) comprises a first through hole (1216) and a second through hole (1219) spaced apart from the first through hole (1216); both of the first through hole (1216) and the second through hole (1219) are in communication with the transmission channel (125); the proximity sensor (30) comprises a transmitter (32) and a receiver (34); the transmitter (32) is corresponding to the first through hole (1216) and configured to emit signals to pass through the first through hole (1216) and the transmission channel (125); the receiver (34) corresponds to the second through hole (1219) and is configured to receive signals that pass through the second through hole (1219) and the transmission channel (125).

10. The electronic device (100) of claim 9, wherein the at least one transmission channel (125) comprises a first transmission channel (1251) and a second transmission channel (1253); the first transmission channel (1251) and the second transmission channel (1253) are spaced apart from each other; the first through hole (1218) is in communication with the first transmission channel (1251), and the second through hole (1219) is in communication with the second transmission channel (1253).

11. The electronic device (100) according to any one of claims 8 to 10, wherein the second mounting surface (1217) defines a recess (1220); the recess (1220) communicates with the through hole (1218); the proximity sensor (30) is disposed in the recess (1220).

12. The electronic device (100) of claim 11, wherein the electronic device (100) comprises a flexible circuit board (36); the flexible circuit board (36) is connected to a main board of the electronic device (100) and covers the recess (1220); the proximity sensor (30) is disposed on a side of the flexible circuit board (36) facing the recess (1220).

13. The electronic device (100) of claim 12, wherein the electronic device (100) comprises a protective member (39); the protective member (39) is accommodated in the recess (1220) and covers the proximity sensor (30), the protective member (39) defines at least one transmission hole (391); the proximity sensor (30) is configured to transmit or/and receive signals through the transmission hole (391).

14. The electronic device (100) of claim 1, wherein the proximity sensor (30) comprises a transmitter (32) and a receiver (34), and both of the transmitter (32) and the receiver (34) are opposite to the non-display portion (1433) via the transmission channel (125); the transmitter (32) and the receiver (34) are spaced apart from each other.

15. The electronic device (100) of claim 14, wherein the at least one transmission channel (125) comprises a first transmission channel (1251) and a second transmission channel (1253); the first transmission channel (1251) is spaced apart from the second transmission channel (1253); the transmitter (32) corresponds to the first transmission channel (1251) and is opposite to the non-display portion (1433) via the first transmission channel (1251); the receiver (34) corresponds to the second transmission channel (1253) and is opposite to the non-display portion (1433) via the second transmission channel (1253).

## Patentansprüche

1. Elektronische Vorrichtung (100), umfassend:
einen Rahmen (1211), der mindestens einen Übertragungskanal (125) darin definiert, und wobei der Übertragungskanal (125) ein erstes Ende (1255) und ein zweites Ende (1257) gegenüber dem ersten Ende (1255) umfasst;
eine Bildschirmanordnung (14), die mit dem Rahmen (1211) verbunden ist; wobei die Bildschirmanordnung (14) einen Anzeigeabschnitt (1431) und einen Nicht-Anzeigeabschnitt (1433) umfasst, der mit einer Kante des Anzeigeabschnitts (1431) verbunden ist, und der Nicht-Anzeigeabschnitt (1433) das erste Ende (1255) abdeckt; und
einen Näherungssensor (30), der in einem durch den Rahmen (1211) definierten Aufnahmeraum (1241) eingerichtet ist; wobei der Näherungssensor (30) an das zweite Ende (1257) angrenzt und über den Übertragungskanal (125) dem Nicht-Anzeigeabschnitt (1433) gegenüberliegt; der Näherungssensor (30) dafür ausgelegt ist, Signale zu senden und zu empfangen, die den Übertragungskanal (125) und den Nicht-Anzeigeabschnitt (1433) durchlaufen; **dadurch gekennzeichnet, dass**
der Rahmen (1211) einen Hauptkörper (127) und einen Trägerabschnitt (129) umfasst, der Trägerabschnitt (129) von einer Seite des Hauptkörpers (127), die dem Aufnahmeraum (1241) zugewandt ist, vorsteht; der Übertragungskanal (125) im Trägerabschnitt (129) definiert ist, der Trägerabschnitt (129) eine mit dem Hauptkörper (127) verbundene Trägerfläche (1291) umfasst, der Nicht-Anzeigeabschnitt (1433) am Trägerabschnitt (129) befestigt und auf der Trägerfläche (1291) gestapelt ist, das erste Ende (1255) des Übertragungskanals (125) die Trägerfläche (1291) durchdringt.

2. Elektronische Vorrichtung (100) nach Anspruch 1, wobei der Rahmen (1211) einen ersten Teilrahmen (1201) und einen dem ersten Teilrahmen (1201) gegenüberliegenden zweiten Teilrahmen (1203) umfasst; die Bildschirmanordnung (14) zwischen dem ersten Teilrahmen (1201) und dem zweiten Teilrahmen (1203) eingerichtet ist; die elektronische Vorrichtung (100) einen im Aufnahmeraum (1241) eingerichteten Empfänger umfasst; der erste Teilrahmen (1201) einen Schallkanal für den Empfänger definiert; der Übertragungskanal (125) im ersten Teilrahmen (1201) oder im zweiten Teilrahmen (1203) definiert ist.

3. Elektronische Vorrichtung (100) nach Anspruch 1, wobei der Nicht-Anzeigeabschnitt (1433) einen Übertragungsbereich (1434) umfasst, der es ermöglicht, dass Signale vom Näherungssensor (30) hindurchgehen; der Übertragungsbereich (1434) gegenüber dem Näherungssensor (30) eingerichtet ist und der Näherungssensor (30) dazu eingerichtet ist, Signale durch den Übertragungsbereich zu senden und zu empfangen.

4. Elektronische Vorrichtung (100) nach Anspruch 1, wobei der Übertragungskanal (125) eine Rille ist; die Rille in einer Seite des Rahmens (1211) definiert ist, die dem Aufnahmeraum (1241) zugewandt ist; der Nicht-Anzeigeabschnitt (1433) und der Näherungssensor (30) jeweils an zwei gegenüberliegenden Enden der Rille eingerichtet sind.

5. Elektronische Vorrichtung (100) nach Anspruch 1, wobei der Übertragungskanal (125) ein Durchgangsloch aufweist; das Durchgangsloch im Trägerabschnitt (129) definiert ist und den Trägerabschnitt (129) durchdringt; und der Nicht-Anzeigeabschnitt (1433) und der Näherungssensor (30) jeweils an zwei gegenüberliegenden Enden des Durchgangslochs eingerichtet sind.

6. Elektronische Vorrichtung (100) nach Anspruch 1, wobei der Trägerabschnitt (129) eine Montagefläche (1293) umfasst, die Montagefläche (1293) auf einer Seite des Trägerabschnitts (129) eingerichtet ist, die dem Aufnahmeraum (1241) zugewandt ist, und mit der Trägerfläche (1291) verbunden ist, und der Übertragungskanal (125) in der Montagefläche (1293) definiert ist.

7. Elektronische Vorrichtung (100) nach Anspruch 1, wobei die elektronische Vorrichtung (100) ein Montageelement (1213) umfasst; das Montageelement (1213) mit dem Trägerabschnitt (129) verbunden und gegenüber der Bildschirmanordnung (14) eingerichtet ist; der Näherungssensor (30) mit dem Montageelement (1213) verbunden ist.

8. Elektronische Vorrichtung (100) nach Anspruch 7, wobei das Montageelement (1213) eine erste Montagefläche (1215), die der Bildschirmanordnung (14) zugewandt ist, und eine zweite Montagefläche (1217) umfasst, die von der Bildschirmanordnung (14) entfernt ist; das Montageelement (1213) mindestens ein Durchgangsloch (1218) darin definiert; das Durchgangsloch (1218) die erste Montagefläche (1215) und die zweite Montagefläche (1217) durchdringt und mit dem Übertragungskanal (125) in Verbindung steht; der Näherungssensor (30) mit der zweiten Montagefläche (1217) verbunden ist und dem Durchgangsloch (1218) entspricht.

9. Elektronische Vorrichtung (100) nach Anspruch 8, wobei das mindestens eine Durchgangsloch (1218) ein erstes Durchgangsloch (1216) und ein zweites Durchgangsloch (1219) umfasst, das vom ersten Durchgangsloch (1216) beabstandet ist; sowohl das erste Durchgangsloch (1216) als auch das zweite Durchgangsloch (1219) mit dem Übertragungskanal (125) in Verbindung stehen; der Näherungssensor (30) einen Sender (32) und einen Empfänger (34) umfasst; der Sender (32) dem ersten Durchgangsloch (1216) entspricht und dafür ausgelegt ist, Signale zu auszusenden, die das erste Durchgangsloch (1216) und den Übertragungskanal (125) durchlaufen; der Empfänger (34) dem zweiten Durchgangsloch (1219) entspricht und dafür ausgelegt ist, Signale zu empfangen, die das zweite Durchgangsloch (1219) und den Übertragungskanal (125) durchlaufen.

10. Elektronische Vorrichtung (100) nach Anspruch 9, wobei der mindestens eine Übertragungskanal (125) einen ersten Übertragungskanal (1251) und einen zweiten Übertragungskanal (1253) umfasst; der erste Übertragungskanal (1251) und der zweite Übertragungskanal (1253) voneinander beabstandet sind; das erste Durchgangsloch (1218) mit dem ersten Übertragungskanal (1251) in Verbindung steht und das zweite Durchgangsloch (1219) mit dem zweiten Übertragungskanal (1253) in Verbindung steht.

11. Elektronische Vorrichtung (100) nach einem der Ansprüche 8 bis 10, wobei die zweite Montagefläche (1217) eine Aussparung (1220) definiert; die Aussparung (1220) mit dem Durchgangsloch (1218) in Verbindung steht; der Näherungssensor (30) in der Aussparung (1220) eingerichtet ist.

12. Elektronische Vorrichtung (100) nach Anspruch 11, wobei die elektronische Vorrichtung (100) eine flexible Leiterplatte (36) umfasst; die flexible Leiterplatte (36) mit einer Leiterplatte der elektronischen Vorrichtung (100) verbunden ist und die Aussparung (1220) bedeckt; der Näherungssensor (30) auf einer der Aussparung (1220) zugewandten Seite der flexiblen Leiterplatte (36) eingerichtet ist.

13. Elektronische Vorrichtung (100) nach Anspruch 12, wobei die elektronische Vorrichtung (100) ein Schutzelement (39) umfasst; das Schutzelement (39) in der Aussparung (1220) untergebracht ist und den Näherungssensor (30) bedeckt, das Schutzelement (39) mindestens ein Übertragungsloch (391) definiert; der Näherungssensor (30) dafür ausgelegt ist, Signale durch das Übertragungsloch (391) zu senden oder/und zu empfangen.

14. Elektronische Vorrichtung (100) nach Anspruch 1, wobei der Näherungssensor (30) einen Sender (32) und einen Empfänger (34) umfasst und sowohl der Sender (32) als auch der Empfänger (34) über den Übertragungskanal (125) dem Nicht-Anzeigeabschnitt (1433) gegenüberliegen; der Sender (32) und der Empfänger (34) voneinander beabstandet sind.

15. Elektronische Vorrichtung (100) nach Anspruch 14, wobei der mindestens eine Übertragungskanal (125) einen ersten Übertragungskanal (1251) und einen zweiten Übertragungskanal (1253) umfasst; der erste Übertragungskanal (1251) vom zweiten Übertragungskanal (1253) beabstandet ist; der Sender (32) dem ersten Übertragungskanal (1251) entspricht und über den ersten Übertragungskanal (1251) dem Nicht-Anzeigeabschnitt (1433) gegenüberliegt; der Empfänger (34) dem zweiten Übertragungskanal (1253) entspricht und über den zweiten Übertragungskanal (1253) dem Nicht-Anzeigeabschnitt (1433) gegenüberliegt.

## Revendications

1. Dispositif électronique (100), comprenant :
une lunette (1211), définissant au moins un canal de transmission (125) dans celui-ci, et le canal de transmission (125) comprenant une première extrémité (1255) et une seconde extrémité (1257) opposée à la première extrémité (1255) ;
un ensemble écran (14), connecté à la lunette (1211) : l'ensemble écran (14) comprenant une partie d'affichage (1431) et une partie de non-affichage (1433) connectée à un bord de la partie d'affichage (1431), et la partie de non-affichage (1433) recouvrant la première extrémité (1255) ; et
un capteur de proximité (30), disposé dans un espace de réception (1241) défini par la lunette (1211) ;
le capteur de proximité (30) étant adjacent à la seconde extrémité (1257), et opposé à la partie de non-affichage (1433) par l'intermédiaire du canal de transmission (125) ; le capteur de proximité (30) étant configuré pour transmettre et recevoir des signaux qui passent à travers le canal de transmission (125) et la partie de non-affichage (1433) ;
**caractérisé en ce que**
la lunette (1211) comprend un corps principal (127) et une partie de support (129), la partie de support (129) fait saillie depuis un côté du corps principal (127) orienté vers l'espace de réception (1241) ; le canal de transmission (125) est défini dans la partie de support (129), la partie de support (129) comprend une surface de support (1291) connectée au corps principal (127), la partie de non-affichage (1433) est fixée à la partie de support (129) et empilée sur la surface de support (1291), la première extrémité (1255) du canal de transmission (125) pénètre dans la surface de support (1291).

2. Dispositif électronique (100) selon la revendication 1, la lunette (1211) comprenant une première sous-lunette (1201) et une seconde sous-lunette (1203) opposée à la première sous-lunette (1201) ; l'ensemble écran (14) étant disposé entre la première sous-lunette (1201) et la seconde sous-lunette (1203) ; le dispositif électronique (100) comprenant un récepteur disposé dans l'espace de réception (1241) ; la première sous-lunette (1201) définissant un canal audio pour le récepteur ; le canal de transmission (125) étant défini dans la première sous-lunette (1201) ou dans la seconde sous-lunette (1203).

3. Dispositif électronique (100) selon la revendication 1, la partie de non-affichage (1433) comprenant une région de transmission (1434) pour permettre aux signaux provenant du capteur de proximité (30) de passer à travers ; la région de transmission (1434) étant disposée à l'opposé du capteur de proximité (30), et le capteur de proximité (30) étant adapté pour transmettre et recevoir des signaux à travers la région de transmission.

4. Dispositif électronique (100) selon la revendication 1, le canal de transmission (125) étant une rainure ; la rainure étant définie dans un côté de la lunette (1211) orienté vers l'espace de réception (1241) ; la partie de non-affichage (1433) et le capteur de proximité (30) étant respectivement disposés au niveau de deux extrémités opposées de la rainure.

5. Dispositif électronique (100) selon la revendication 1, le canal de transmission (125) ayant un trou traversant ; le trou traversant étant défini dans la partie de support (129) et pénétrant dans la partie de support (129) ; et la partie de non-affichage (1433) et le capteur de proximité (30) étant respectivement disposés au niveau de deux extrémités opposées du trou traversant.

6. Dispositif électronique (100) selon la revendication 1, la partie de support (129) comprenant une surface de montage (1293), la surface de montage (1293) étant disposée sur un côté de la partie de support (129) orienté vers l'espace de réception (1241) et étant connectée à la surface de support (1291), et le canal de transmission (125) étant défini dans la surface de montage (1293).

7. Dispositif électronique (100) selon la revendication 1, le dispositif électronique (100) comprenant un élément de montage (1213) ; l'élément de montage (1213) étant connecté à la partie de support (129) et disposé à l'opposé de l'ensemble écran (14) ; le capteur de proximité (30) étant connecté à l'élément de montage (1213).

8. Dispositif électronique (100) selon la revendication 7, l'élément de montage (1213) comprenant une première surface de montage (1215) orientée vers l'ensemble écran (14) et une seconde surface de montage (1217) éloignée de l'ensemble écran (14) ; l'élément de montage (1213) définissant au moins un trou traversant (1218) dans celui-ci ; le trou traversant (1218) pénétrant dans la première surface de montage (1215) et la seconde surface de montage (1217) et communiquant avec le canal de transmission (125) ; le capteur de proximité (30) étant connecté à la seconde surface de montage (1217) et correspondant au trou traversant (1218).

9. Dispositif électronique (100) selon la revendication 8, l'au moins un trou traversant (1218) comprenant un premier trou traversant (1216) et un second trou traversant (1219) espacé du premier trou traversant (1216) ; le premier trou traversant (1216) et le second trou traversant (1219) étant tous deux en communication avec le canal de transmission (125) ; le capteur de proximité (30) comprenant un émetteur (32) et un récepteur (34) ; l'émetteur (32) correspondant au premier trou traversant (1216) et étant configuré pour émettre des signaux qui passent à travers le premier trou traversant (1216) et le canal de transmission (125) ; le récepteur (34) correspondant au second trou traversant (1219) et étant configuré pour recevoir des signaux qui passent à travers le second trou traversant (1219) et le canal de transmission (125).

10. Dispositif électronique (100) selon la revendication 9, l'au moins un canal de transmission (125) comprenant un premier canal de transmission (1251) et un second canal de transmission (1253) ; le premier canal de transmission (1251) et le second canal de transmission (1253) étant espacés l'un de l'autre ; le premier trou traversant (1218) étant en communication avec le premier canal de transmission (1251), et le second trou traversant (1219) étant en communication avec le second canal de transmission (1253).

11. Dispositif électronique (100) selon l'une quelconque des revendications 8 à 10, la seconde surface de montage (1217) définissant un évidement (1220) : l'évidement (1220) communiquant avec le trou traversant (1218) ; le capteur de proximité (30) étant disposé dans l'évidement (1220).

12. Dispositif électronique (100) selon la revendication 11, le dispositif électronique (100) comprenant une carte de circuit imprimé flexible (36) : la carte de circuit imprimé flexible (36) étant connectée à une carte principale du dispositif électronique (100) et recouvrant l'évidement (1220) ; le capteur de proximité (30) étant disposé sur un côté de la carte de circuit imprimé flexible (36) orienté vers l'évidement (1220).

13. Dispositif électronique (100) selon la revendication 12, le dispositif électronique (100) comprenant un élément de protection (39) ; l'élément de protection (39) étant logé dans l'évidement (1220) et recouvrant le capteur de proximité (30), l'élément de protection (39) définissant au moins un trou de transmission (391) ; le capteur de proximité (30) étant configuré pour transmettre et/ou recevoir des signaux à travers le trou de transmission (391).

14. Dispositif électronique (100) selon la revendication 1, le capteur de proximité (30) comprenant un émetteur (32) et un récepteur (34) et l'émetteur (32) et le récepteur (34) étant tous deux opposés à la partie non affichage (1433) par l'intermédiaire du canal de transmission (125) ; l'émetteur (32) et le récepteur (34) étant espacés l'un de l'autre.

15. Dispositif électronique (100) selon la revendication 14, l'au moins un canal de transmission (125) comprenant un premier canal de transmission (1251) et un second canal de transmission (1253) ; le premier canal de transmission (1251) étant espacé du second canal de transmission (1253) ; l'émetteur (32) correspondant au premier canal de transmission (1251) et étant opposé à la partie de non-affichage (1433) par l'intermédiaire du premier canal de transmission (1251) ; le récepteur (34) correspondant au second canal de transmission (1253) et étant opposé à la partie de non-affichage (1433) par l'intermédiaire du second canal de transmission (1253).
